# FASCICULE DE BREVET EUROPEEN

(11) **EP 3 803 704 B1**
(45) Date de publication et mention de la délivrance du brevet: **16.04.2025**
(21) Numéro de dépôt: 19726433.6
(22) Date de dépôt: 29.05.2019
(51) Int. Cl.: G06N 3/0464, G06N 3/0895, G06N 3/096, G06N 3/045, G06N 20/10

(54) **PROCEDE DE TRANSFERT D'APPRENTISSAGE D'UN PREMIER RESEAU DE NEURONES CONVOLUTIF VERS UN DEUXIEME RESEAU DE NEURONES CONVOLUTIF**
VERFAHREN ZUM ÜBERTRAGEN VON LERNEN VON EINEM ERSTEN NEURONALEN FALTUNGSNETZ ZU EINEM ZWEITEN NEURONALEN FALTUNGSNETZ
METHOD FOR TRANSFERRING LEARNING FROM A FIRST CONVOLUTIONAL NEURAL NETWORK TO A SECOND CONVOLUTIONAL NEURAL NETWORK

(30) Priorité: 01.06.2018 FR 1854785
(43) Date de publication de la demande: 14.04.2021
(73) Titulaire: Commissariat à l'Energie Atomique et aux Energies Alternatives, 75015 Paris (FR)
(72) Inventeur: TAMAAZOUSTI, Youssef, 91120 PALAISEAU (FR); GIRARD, Julien, 91300 MASSY (FR); LE BORGNE, Hervé, 91120 PALAISEAU (FR); HUDELOT, Céline, 92340 BOURG LA REINE (FR)
(74) Mandataire: Atout PI Laplace
(86) Numéro de dépôt international: PCT/EP2019/063943
(87) Numéro de publication internationale: WO 2019/229117

(56) Documents cités:
- HUANG QIN ET AL: "Unsupervised Clustering Guided Semantic Segmentation", 2018 IEEE WINTER CONFERENCE ON APPLICATIONS OF COMPUTER VISION (WACV), IEEE, 12 March 2018 (2018-03-12), pages 1489 - 1498, XP033337772, DOI: 10.1109/WACV.2018.00167
- GE ZONGYUAN ET AL: "Subset feature learning for fine-grained category classification", 2015 IEEE CONFERENCE ON COMPUTER VISION AND PATTERN RECOGNITION WORKSHOPS (CVPRW), IEEE, 7 June 2015 (2015-06-07), pages 46 - 52, XP032795532, DOI: 10.1109/CVPRW.2015.7301271
- WANG XIAOSONG ET AL: "Unsupervised Joint Mining of Deep Features and Image Labels for Large-Scale Radiology Image Categorization and Scene Recognition", 2017 IEEE WINTER CONFERENCE ON APPLICATIONS OF COMPUTER VISION (WACV), IEEE, 24 March 2017 (2017-03-24), pages 998 - 1007, XP033096884, DOI: 10.1109/WACV.2017.116
- KRIEGEL H ET AL: "A Generic Framework for Efficient Subspace Clustering of High-Dimensional Data", DATA MINING, FIFTH IEEE INTERNATIONAL CONFERENCE ON HOUSTON, TX, USA 27-30 NOV. 2005, PISCATAWAY, NJ, USA,IEEE, 27 November 2005 (2005-11-27), pages 250 - 257, XP010870453, ISBN: 978-0-7695-2278-4, DOI: 10.1109/ICDM.2005.5
- CHENG-RU LIN ET AL: "Combining Partitional and Hierarchical Algorithms for Robust and Efficient Data Clustering with Cohesion Self-Merging", IEEE TRANSACTIONS ON KNOWLEDGE AND DATA ENGINEERING, IEEE SERVICE CENTER, LOS ALAMITOS, CA, US, vol. 17, no. 2, 17 December 2004 (2004-12-17), pages 145 - 159, XP011124630, ISSN: 1041-4347, DOI: 10.1109/TKDE.2005.21
- YOUSSEF TAMAAZOUSTI ET AL: "MuCaLe-Net: multi categorical-level networks to generate more discriminating features (w/ supplementary material)", PROCEEDINGS OF THE 2017 IEEE CONFERENCE ON COMPUTER VISION AND PATTERN RECOGNITION (CVPR'17), 21 July 2017 (2017-07-21), pages 6711 - 6720, XP055569351, Retrieved from the Internet <URL:http://openaccess.thecvf.com/content_cvpr_2017/papers/Tamaazousti_MuCaLe-Net_Multi_Categorical-Level_CVPR_2017_paper.pdf> [retrieved on 20190216]

## Description

L'invention porte sur un procédé de transfert d'apprentissage d'un premier réseau de neurones convolutif vers un deuxième réseau de neurones convolutif. Elle porte également sur un système d'apprentissage d'un réseau de neurones convolutif, ainsi que sur un programme d'ordinateur correspondant. Elle peut trouver une application dans la recherche d'information visuelle par le contenu, ou encore dans la classification d'image, également appelée catégorisation d'image.

Les processus de classification supervisée, mis en œuvre par un réseau de neurones convolutif (ou CNN selon la terminologie anglo-saxonne, pour *Convolutional Neural Network),* sont utilisés couramment en dans les domaines d'applications précités. Le processus comprend une phase d'apprentissage, et une phase de test. Durant la phase d'apprentissage, des caractéristiques visuelles, formant un vecteur caractéristique, propres à chaque catégorie, sont apprises en fonction de l'étiquette (ou *label* selon la terminologie anglo-saxonne) associée à chaque image d'apprentissage. Les caractéristiques visuelles forment un vecteur caractéristique. En phase de test, les caractéristiques visuelles de nouvelles images, dites images de test, sont extraites. En fonction du modèle appris conformément au modèle d'apprentissage, une étiquette est attribuée à l'image de test.

Les processus de classification supervisée requièrent de connaître *a priori* les catégories dans laquelle doit être classée chaque image lors de l'apprentissage. Ils sont donc adaptés uniquement à un problème source connu, par exemple reconnaître et distinguer des chiens et des chats. Si un descripteur d'image est utilisé pour un problème différent, appelé problème cible, le descripteur d'image n'est donc pas adapté. Un problème cible différent peut être par exemple de reconnaître et de distinguer des oiseaux et des rongeurs.

Un problème bien connu en classification supervisée est que les réseaux de neurones convolutifs nécessitent un grand nombre de données annotées pour être appris. Or, les problèmes cibles ne sont pas toujours pourvus de telles données annotées. Une solution connue est de pratiquer le transfert d'apprentissage. Un réseau de neurones convolutif est pré-appris sur un problème source suffisamment pourvu en données annotées. Le réseau de neurones convolutif pré-appris est « tronqué » à une couche intermédiaire et est utilisé comme extracteur de caractéristiques visuelles. Ainsi, une image d'un problème cible est décrite par un vecteur de dimension fixe.

Les performances d'une telle approche sur le problème cible sont donc d'autant meilleures que la représentation utilisée y est adaptée. Or, en pratique, le problème cible n'est pas forcément connu au moment de l'apprentissage du réseau de neurones convolutif du problème source. On souhaite donc apprendre à partir du problème source un réseau de neurones convolutif pouvant fournir une représentation la plus universelle possible, à savoir qui soit adaptée au plus grand nombre possible de problème cibles, sans qu'ils soient connus *a priori.*

Une solution pour obtenir des descripteurs plus universels est connue du document *«* Learning More Universal Representations for Transfer-Leaming » (Youssef Tamaazousti et al., 2017, disponible sous lien https://arxiv.org/abs/1712.09708). La combinaison d'un réseau de neurones convolutif appris sur des catégories spécifiques et d'un réseau de neurones convolutif appris sur des catégories génériques donne des représentations plus universelles. Néanmoins, le réseau de neurones convolutif générique présente des performances inférieures au réseau de neurones convolutif spécifique. Ainsi, si des données encore plus spécifiques étaient disponibles, il serait possible d'obtenir un réseau de neurones convolutif encore plus performant. Pour un concept très spécifique (une race de chien, par exemple un labrador), on peut par exemple imaginer des données annotant la pose ou le point de vue (« labrador vu de face » « labrador vu de profil » « labrador vu en entier » « tête de labrador », etc). Toutefois, il est très couteux de produire de telles données manuellement et difficile de déterminer une telle pose automatiquement sans ces données.

L'invention vise donc à déterminer automatiquement des sous-catégories aux catégories les plus spécifiques d'une base de données d'images annotées, sans travail d'annotation manuel, et sans collecte d'images supplémentaires, afin d'apprendre un réseau convolutif sur ces catégories, ce réseau convolutif fournissant un descripteur d'image plus universel.

Le 12 mars 2018, Huang et al. publièrent un article (Unsupervised clustering guided semantic segmentation ; actes de WACV'18, pp. 1489-1498 ; DOI:10.1109/ WACV.2018.00167) décrivant un apprentissage d'un réseau de neurones convolutif à partir d'images étiquetées selon des catégories, suivi de la construction de sous-catégories par partitionnement des images de chaque catégorie en sous-groupes, afin d'étiqueter de nouveau les images et d'apprendre un autre réseau de neurones convolutif à partir des images nouvellement étiquetées.

En 2015, Ge et al. publièrent un article (Subset feature learning for fine-grained category classification ; actes de CVPRW'15, pp. 46-52 ; DOI:10.1109/ CVPRW.2015.7301271) décrivant un apprentissage d'un réseau de neurones convolutif (comme extracteur de caractéristiques) générique quant au domaine, suivi d'un apprentissage de caractéristiques spécifiques à des sous-ensembles, à partir de sous-ensembles pré-partitionnés contenant des images de classes à granularité fine visuellement similaires, obtenus par k-moyennes, et appris par des réseaux de neurones convolutifs respectifs.

En 2017, Wang et al. publièrent un article (Unsupervised joint mining of deep features and image labels for large-scale radiology image categorization and scene recognition ; actes de WACV'17, pp. 998-1007 ; DOI:10.1109/ WACV.2017.116) décrivant un apprentissage itératif d'un réseau de neurones convolutif, extrayant des caractéristiques qui sont ensuite partitionnées par k-moyennes afin d'ajuster de manière fine le réseau à partir des étiquettes issues du partitionnement.

Un objet de l'invention est donc un procédé, mis en œuvre par ordinateur, d'extraction de caractéristiques visuelles, utilisant deux réseaux de neurones convolutifs, et réalisant un transfert d'apprentissage du premier réseau de neurones convolutif vers le deuxième réseau de neurones convolutif, comprenant les étapes suivantes :
a) Apprentissage du premier réseau de neurones convolutif à partir d'une base de données d'images labellisées selon une pluralité de catégories du niveau le plus spécifique de la base de données, chaque image pouvant être représentée par un vecteur caractéristique ;
b) Pour chacune des catégories du niveau le plus spécifique, construction d'au moins une sous-catégorie ;
c) Relabellisation de la base de données d'images avec l'ensemble des sous-catégories, pour former une base de données d'images relabellisée ;
d) Apprentissage du deuxième réseau de neurones convolutif à partir de la base de données d'images relabellisée ;
l'étape b) de construction d'au moins une sous-catégorie comprend les sous-étapes de :
b1) Pour chacune des catégories du niveau le plus spécifique, partitionnement, en une pluralité de sous-groupes, des images de la catégorie ;
b2) Pour chaque sous-groupe, détermination du nombre d'images, et si le nombre d'images est inférieur à un seuil, rattachement de chaque image du sous-groupe à un sous-groupe dont le nombre d'images est supérieur au seuil, appelé grand sous-groupe, chaque image étant rattachée au grand sous-groupe le plus proche, en déterminant un vecteur caractéristique d'un grand sous-groupe le plus proche du vecteur caractéristique représentant l'image ;
b3) Détermination d'une matrice de mesures de similarité entre chacun des grands sous-groupes ;
b4) Fusion des grands sous-groupes en fonction de la matrice de mesures de similarité, pour former les sous-catégories.

Avantageusement, le partitionnement est mis en œuvre, à la sous-étape b1), de façon aléatoire, selon un nombre prédéterminé de sous-groupes, les sous-groupes comprenant sensiblement le même nombre d'images.

Avantageusement, le partitionnement est mis en œuvre, à la sous-étape b1), par un partitionnement en K-moyennes appliqué au vecteur caractéristique de chaque image.

Avantageusement, la sous-étape b3) comprend, pour chaque couple de grands sous-groupes :
- l'apprentissage d'un classificateur, en utilisant une pluralité de vecteurs caractéristiques du grand sous-groupe, appelé premier grand sous-groupe, en tant que classe positive, et une pluralité de vecteurs caractéristiques d'un sous-groupe composé de vecteurs d'images issus aléatoirement d'une pluralité de grands sous-groupes, en tant que classe négative ;
- Pour chaque grand sous-groupe différent du premier grand sous-groupe, le grand sous-groupe différent étant appelé deuxième grand sous-groupe, la détermination d'un score de similarité du deuxième grand sous-groupe vers le premier grand sous-groupe, en testant le classificateur sur une pluralité de vecteurs caractéristiques du deuxième grand sous-groupe.

Avantageusement, le classificateur est un classificateur de type SVM.

Avantageusement, la sous-étape b3) comprend, pour chaque couple de grands sous-groupes, chaque couple étant composé d'un premier grand sous-groupe et d'un deuxième grand sous-groupe :
- la mesure d'une distance entre chacun des vecteurs caractéristiques du premier grand sous-groupe et chacun des chacun des vecteurs caractéristiques du deuxième grand sous-groupe ;
- la détermination d'un score de similarité entre le premier grand sous-groupe et le deuxième grand sous-groupe, par le calcul de la moyenne des distances.

Avantageusement, la sous-étape b4) comprend la détermination d'un seuil de similarité, et, pour chaque couple de grands sous-groupes, la fusion d'un premier grand sous-groupe et d'un deuxième grand sous-groupe si :
- le score de similarité du deuxième grand sous-groupe vers le premier grand sous-groupe est supérieur au seuil de similarité ;
- le score de similarité du premier grand sous-groupe vers le deuxième grand sous-groupe est supérieur au seuil de similarité.

Avantageusement, la fusion du premier grand sous-groupe et du deuxième grand sous-groupe est effectuée si :
- le score de similarité du deuxième grand sous-groupe vers le premier grand sous-groupe est le score de similarité le plus élevé parmi tous les autres scores de similarité de couples comprenant le deuxième grand sous-groupe ;
- le score de similarité du premier grand sous-groupe vers le deuxième grand sous-groupe est le score de similarité le plus élevé parmi tous les autres scores de similarité de couples comprenant le premier grand sous-groupe.

Avantageusement, les sous-étapes b3) et b4) sont réitérées jusqu'à obtenir un nombre prédéterminé de sous-catégories.

L'invention se rapporte également à un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes du procédé précité, lorsque ledit programme est exécuté sur un ordinateur.

L'invention se rapporte également à un système d'extraction de caractéristiques visuelles, configuré pour mettre en œuvre le procédé précité.

D'autres caractéristiques, détails et avantages de l'invention ressortiront à la lecture de la description faite en référence aux dessins annexés donnés à titre d'exemple et qui représentent, respectivement :
- les figures 1 et 2, des schémas illustrant les différentes étapes du procédé selon l'invention ;
- la figure 3, une illustration des différents regroupements d'images mis en œuvre dans le procédé selon l'invention ;
- la figure 4, un exemple de matrice de similarité mise en œuvre dans le procédé selon l'invention ;
- la figure 5, une illustration de l'ordinateur mettant en œuvre le procédé selon l'invention.

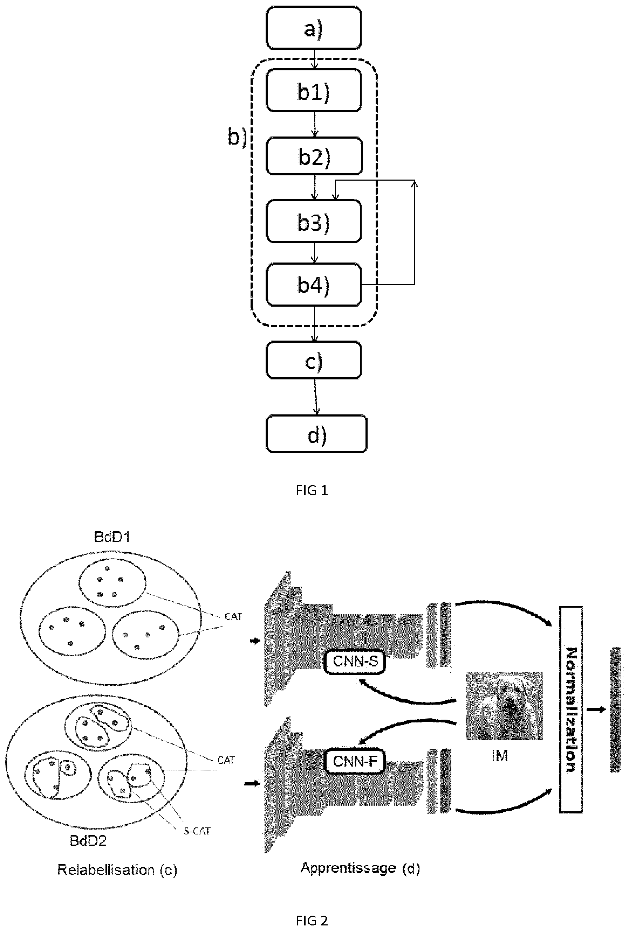

Les figures 1 et 2 illustrent schématiquement les différentes étapes du procédé. Plus particulièrement, la figure 1 est un ordinogramme représentant les différentes étapes du procédé selon l'invention. La figure 2 représente d'une autre manière le procédé selon l'invention. Le procédé de transfert d'apprentissage d'un premier réseau de neurones convolutif CNN-S vers un deuxième réseau de neurones convolutif CNN-F comprend les étapes suivantes :
a) Apprentissage du premier réseau de neurones convolutif CNN-S à partir d'une base de données d'images BdD1 labellisées selon une pluralité de catégories CAT du niveau le plus spécifique de la base de données BdD, chaque image pouvant être représentée par un vecteur caractéristique. Une telle base de données est par exemple la base ImageNet, labellisée selon environ mille catégories ;
b) Pour chacune des catégories CAT du niveau le plus spécifique, construction d'au moins une sous-catégorie S-CAT. Cette étape est détaillée par la suite ;
c) Relabellisation de la base de données d'images avec l'ensemble des sous-catégories S-CAT, pour former une base de données d'images relabellisée BdD2 ;
d) Apprentissage du deuxième réseau de neurones convolutif CNN-F à partir de la base de données d'images relabellisée BdD2. Cet apprentissage peut par exemple être effectué selon la méthode du fine-tuning (ou réglage fin), décrite notamment dans le document *«* Learning and Transferring Mid-Level Image Representations using Convolutional Neural Networks » (Oquab et al. CVPR, 2014), et disponible sous le lien http://www.di.ens.fr/willow/pdfscurrent/oquab14cvpr.pdf

Ainsi, étant donné une image IM, sa représentation visuelle est, après normalisation, la combinaison de la représentation visuelle provenant du premier réseau de neurones convolutif CNN-S et celle provenant du deuxième réseau de neurones convolutif CNN-F. La représentation visuelle est par exemple la sortie de l'avant dernière couche totalement connectée d'un réseau de neurones convolutif. Une telle combinaison peut par exemple être la concaténation des représentations provenant des deux réseaux.

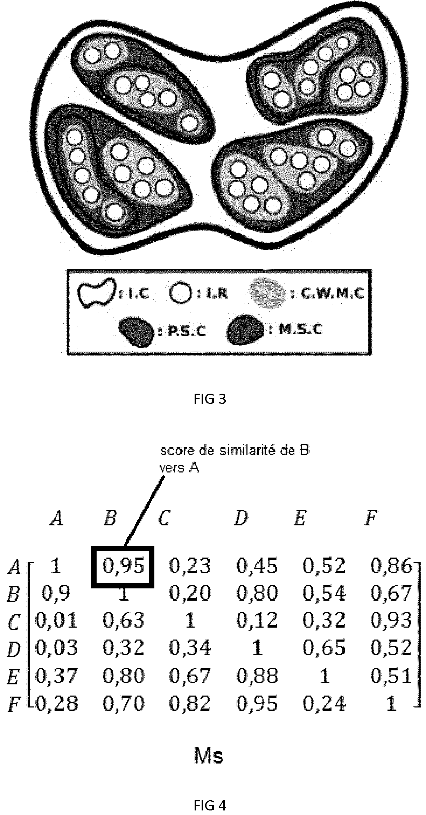

Les figures 1 et 3 sont analysées en parallèle. L'ensemble IC représente une catégorie spécifique, à savoir la catégorie hiérarchiquement la plus basse d'une base de données d'images annotées associée à une hiérarchie de concepts. La base de données d'images annotées peut être par exemple la base de données ImageNet, associée à la hiérarchie de WordNet. La catégorie la plus spécifique peut regrouper par exemple toutes les images contenant des labradors. L'ensemble IC comprend, pour chaque catégorie spécifique, un ensemble d'images représentées par leur vecteur caractéristique IR, qui constitue une représentation de l'image. Le procédé selon l'invention est adapté pour déterminer des sous-catégories d'une catégorie la plus spécifique d'une base de données d'images annotées. Il est mis en œuvre de la même manière pour toutes les catégories spécifiques de la base de données.

A la sous-étape b1), toutes les images de la catégorie sont réparties en sous-groupes. Le partitionnement en sous-groupes peut être réalisé de façon aléatoire, en répartissant toutes les images en K sous-groupes. Il est à noter que le partitionnement étant réalisé sur des catégories spécifiques, les vecteurs caractéristiques se ressemblent fortement au sein-même de la catégorie. Les K sous-groupes sont par exemple équilibrés, dans le sens où tous les sous-groupes ont sensiblement la même taille, quand le tirage aléatoire est uniforme. Cette caractéristique peut être recherchée pour la phase d'apprentissage d'un réseau de neurones convolutif.

En variante, le partitionnement en sous-groupes des images de la catégorie peut être réalisé selon la méthode des K-moyennes. Cela permet de regrouper des vecteurs caractéristiques proches les uns des autres. Pour cela, on utilise une des couches du réseau de neurones convolutif en tant que descripteur d'image. On obtient alors un vecteur caractéristique pour chaque image de la catégorie spécifique. K centroïdes sont répartis parmi l'ensemble des vecteurs caractéristiques. Chaque vecteur caractéristique est assigné à au centroïde le plus proche, pour former K sous-groupes. Le centroïde de chaque sous-ensemble est repositionné sur le barycentre du sous-ensemble, et les distances entre chaque vecteur et chacun des centroïdes sont recalculées, pour former des sous-groupes mis dont la composition est mise à jour. Lorsque la méthode des K-moyennes converge, chacun des K sous-groupes est formé par les vecteurs caractéristiques partageant le même centroïde. La distance mesurée pour cette sous-étape peut être la distance euclidienne, mais d'autres méthodes de mesure de distance sur des espaces vectoriels peuvent être employées. Sur la figure 3, les sous-groupes obtenus par la méthode des K-moyennes sont visibles sous l'intitulé C.W.M.C.

L'emploi de la méthode des K-moyennes peut aboutir à des sous-groupes peu équilibrés, à savoir certains sous-groupes ayant un nombre important d'images, et d'autres sous-groupes disposant de peu d'images. La sous-étape b2) du procédé selon l'invention vise à rééquilibrer la composition des sous-groupes, en supprimant les sous-groupes ayant un nombre trop faible d'images. On définit ainsi un seuil. Si le sous-groupe contient un nombre d'images supérieur au seuil, le sous-groupe est alors considéré comme un grand sous-groupe. Pour chaque sous-groupe dont le nombre d'images est inférieur au seuil, chaque image du sous-groupe est rattachée, individuellement, à son grand sous-groupe le plus proche. Le rattachement est réalisé en mesurant la distance entre le vecteur caractéristique décrivant l'image et chacun des vecteurs caractéristiques des grands sous-groupes. L'image est associée au grand sous-groupe dont un des vecteurs caractéristiques est le plus proche du vecteur caractéristique décrivant l'image. Sur la figure 3, les sous-groupes ayant été modifiés après rééquilibrage sont visibles sous l'intitulé P.S.C.

Le procédé selon l'invention comprend une sous-étape b3), d'évaluation de la similarité entre chacun des grands sous-groupes. L'évaluation de la similarité est effectuée individuellement, entre chacun des grands sous-groupes deux à deux. La similarité d'un grand sous-groupe vers un autre grand sous-groupe n'est pas nécessairement symétrique. Ainsi, pour chaque couple de grands sous-groupes, constitué d'un premier grand sous-groupe et d'un deuxième grand sous-groupe, on évalue la similarité du premier grand sous-groupe vers le deuxième grand sous-groupe, et la similarité du deuxième grand sous-groupe vers le premier grand sous-groupe.

En référence à la figure 4, pour un sous-groupe donné (par exemple le sous-groupe A), on considère un classificateur binaire (également appelé « classifieur » dans le domaine considéré) de préférence un classificateur linéaire, de type SVM (pour Support Vector Machine, ou Machine à Vecteurs de Support, ou encore Séparateur à Vaste Marge). Durant la phase d'apprentissage, le classificateur prend comme classe positive une pluralité de vecteurs caractéristiques du grand sous-groupe. De préférence, la classe positive est composée de l'intégralité des vecteurs caractéristiques du grand sous-groupe. La classe négative est composée d'un sous-groupe créé *ad-hoc.* Le sous-groupe créé *ad-hoc* contient par exemple des vecteurs caractéristiques issus aléatoirement d'une pluralité de grands sous-groupes. De préférence, les vecteurs caractéristiques sont issus aléatoirement de tous les grands sous-groupes A à F, de façon équiprobable. Alternativement, le sous-groupe créé *ad-hoc* contient par exemple des vecteurs caractéristiques issus d'images collectées aléatoirement dans une base d'images *ad-hoc,* par exemple sur internet.

Pour chacun des autres grands sous-groupes (B à F), on teste le classificateur sur une pluralité de vecteurs caractéristiques, de préférence sur tous les vecteurs caractéristiques de l'autre grand sous-groupe. Pour chaque autre grand sous-groupe, on obtient ainsi une série de mesures pour chacun des vecteurs caractéristiques du sous-groupe. La mesure, pour un vecteur caractéristique du sous-groupe, est égale à la probabilité que le vecteur caractéristique appartienne à la classe positive définie pour l'apprentissage du classificateur. Les mesures peuvent être rapportées à un nombre réel entre 0 et 1, par exemple par une fonction sigmoïde. Ces mesures sont ensuite moyennées, pour aboutir à cinq scores de similarité (respectivement des grands sous-groupes B, C, D, E et F vers le grand sous-groupe A). La première ligne de la matrice Ms illustrée par la figure 4 représente ces scores de similarité. Par exemple, le score de similarité du grand sous-groupe B vers le grand sous-groupe A est égale à 0,95.

Le même procédé est appliqué pour tous les autres grands sous-groupes (lignes B à F de la matrice de similarité Ms).

Le score de similarité entre chacun des grands sous-groupes peut être déterminé différemment. Par exemple, la distance entre chacun des vecteurs caractéristiques de grands sous-groupes différents peut être mesurée. Le score de similarité entre deux grands sous-groupes correspond à la moyenne des distances entre les vecteurs caractéristiques de ces grands sous-groupes.

La sous-étape b4) du procédé selon l'invention consiste à fusionner les grands sous-groupes en fonction de la matrice de mesures de similarité, pour former les sous-catégories. On détermine d'abord un seuil de similarité.

Selon un premier mode de réalisation, deux grands sous-groupes (un premier grand sous-groupe et un deuxième grand sous-groupe) sont fusionnés si toutes les conditions suivantes sont réunies :
- le score de similarité du deuxième grand sous-groupe vers le premier grand sous-groupe est supérieur au seuil de similarité ;
- le score de similarité du premier grand sous-groupe vers le deuxième grand sous-groupe est supérieur au seuil de similarité ;
- le score de similarité du deuxième grand sous-groupe vers le premier grand sous-groupe est le score de similarité le plus élevé parmi tous les autres scores de similarité de couples comprenant le deuxième grand sous-groupe ;
- le score de similarité du premier grand sous-groupe vers le deuxième grand sous-groupe est le score de similarité le plus élevé parmi tous les autres scores de similarité de couples comprenant le premier grand sous-groupe.

En référence à la figure 4, avec un seuil de similarité fixé à titre d'exemple à 0,8, on constate que :
- le score de similarité de B vers A vaut 0,95, ce qui est supérieur au seuil de similarité ;
- le score de similarité de A vers B vaut 0,9, ce qui est supérieur au seuil de similarité ;
- le score de similarité de B vers A vaut 0,95, ce qui correspond à la valeur maximale de la première ligne ;
- le score de similarité de A vers B vaut 0,90, ce qui correspond à la valeur maximale de la deuxième ligne.

Les grands sous-groupes A et B peuvent donc fusionner.

Selon un deuxième mode de réalisation, un premier grand sous-groupe et un deuxième grand sous-groupe sont fusionnés si toutes les conditions suivantes sont réunies :
- le score de similarité du deuxième grand sous-groupe vers le premier grand sous-groupe est supérieur au seuil de similarité ;
- le score de similarité du premier grand sous-groupe vers le deuxième grand sous-groupe est supérieur au seuil de similarité.

En référence à la figure 4, avec un seuil de similarité fixé à titre d'exemple à 0,8, on constate que :
- le score de similarité de F vers C vaut 0,93, ce qui est supérieur au seuil de similarité ;
- le score de similarité de C vers F vaut 0,82, ce qui est supérieur au seuil de similarité.

Les grands sous-groupes C et F peuvent donc fusionner.

Selon un troisième mode de réalisation, un premier grand sous-groupe et un deuxième grand sous-groupe sont fusionnés si toutes les conditions suivantes sont réunies :
- le score de similarité du deuxième grand sous-groupe vers le premier grand sous-groupe est supérieur à un premier seuil de similarité ;
- le score de similarité du premier grand sous-groupe vers le deuxième grand sous-groupe est supérieur à un deuxième seuil de similarité.

Le deuxième seuil de similarité est inférieur au premier seuil de similarité, par exemple égale à la moitié du premier seuil de similarité. Ce troisième mode de réalisation permet de fusionner des grands sous-groupes dits « asymétriquement similaires », par opposition au premier et au deuxième modes de réalisation, qui permet de fusionner des grands sous-groupes dits « symétriquement similaires ».

Les sous-catégories d'images sont constituées des grands sous-groupes fusionnés, ainsi que des autres grands sous-groupes non fusionnés. Sur la figure 3, les sous-groupes ayant été fusionnés sont visibles sous l'intitulé M.S.C. Les sous-étapes b3) et b4) peuvent être réitérées, jusqu'à obtenir un nombre prédéterminé de sous-groupes fusionnés. Dans ce cas, après la fusion des grands sous-groupes similaires, une nouvelle matrice de similarité est générée, et de nouveaux grands sous-groupes sont éventuellement fusionnés, s'ils remplissent les critères de similarité précités. En cas d'itération, si aucun sous-groupe n'est fusionné, le processus s'arrête.

Un réseau de neurones convolutif CNN-F est appris avec les sous-catégories ainsi obtenues. Le réseau de neurones convolutif CNN-F peut être combiné au réseau de neurones convolutif CNN-S, qui a été appris avec les catégories initiales, afin d'obtenir des représentations plus universelles, donc adaptées au plus grand nombre de problèmes cibles.

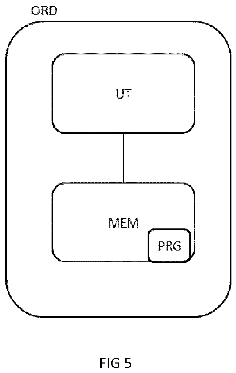

Le procédé de transfert d'apprentissage est mis en œuvre par ordinateur ORD. En référence à la figure 5, l'ordinateur ORD comporte une unité de traitement UT (comportant par exemple un ou plusieurs processeurs) et une mémoire MEM (comportant par exemple une mémoire RAM) pour le stockage de fichiers de données et de programmes d'ordinateurs. La mémoire MEM comporte en particulier un programme PRG comprenant des instructions pour la réalisation des étapes d'un procédé de transfert d'apprentissage tel que décrit précédemment, lorsque ledit programme PRG est exécuté sur l'ordinateur par l'unité de traitement UT. Le programme PRG pourrait tout aussi bien être divisé selon toutes les combinaisons possibles en un ou plusieurs sous-programmes. Les étapes réalisées pourraient aussi être au moins en partie micro programmées ou micro câblées dans des circuits intégrés dédiés. Ainsi, en variante, l'ordinateur mettant en œuvre le procédé pourrait être remplacé par un dispositif électronique composé uniquement de circuits numériques (sans programme d'ordinateur) pour la réalisation des mêmes étapes. En alternative, les procédés peuvent être exécutés de façon répartie.

## Revendications

1. Procédé, mis en œuvre par ordinateur (ORD), d'extraction de caractéristiques visuelles à partir d'images, utilisant deux réseaux de neurones convolutifs, et de transfert d'apprentissage du premier réseau de neurones convolutif vers le deuxième réseau de neurones convolutif, comprenant les étapes suivantes :
a) Apprentissage du premier réseau de neurones convolutif à partir d'une base de données d'images labellisées selon une pluralité de catégories du niveau le plus spécifique de la base de données, chaque image pouvant être représentée par un vecteur caractéristique ;
b) Pour chacune des catégories du niveau le plus spécifique, construction d'au moins une sous-catégorie ;
c) Relabellisation de la base de données d'images avec l'ensemble des sous-catégories, pour former une base de données d'images relabellisée ;
d) Apprentissage du deuxième réseau de neurones convolutif à partir de la base de données d'images relabellisée ;
l'étape b) de construction d'au moins une sous-catégorie comprenant les sous-étapes de :
b1) Pour chacune des catégories du niveau le plus spécifique, partitionnement, en une pluralité de sous-groupes (C.W.M.C), des images de la catégorie (I.C) ;
b2) Pour chaque sous-groupe (C.W.M.C), détermination du nombre d'images (I.R), et si le nombre d'images (I.R) est inférieur à un seuil, rattachement de chaque image (I.R) du sous-groupe (C.W.M.C) à un sous-groupe (C.W.M.C) dont le nombre d'images est supérieur au seuil, appelé grand sous-groupe, chaque image (I.R) étant rattachée au grand sous-groupe (C.W.M.C) le plus proche, en déterminant un vecteur caractéristique d'un grand sous-groupe (C.W.M.C) le plus proche du vecteur caractéristique représentant l'image ;
b3) Détermination d'une matrice (Ms) de mesures de similarité entre chacun des grands sous-groupes (C.W.M.C) ;
b4) Fusion des grands sous-groupes en fonction de la matrice de mesures de similarité, pour former les sous-catégories (M.S.C).

2. Procédé selon la revendication 1, le partitionnement étant mis en œuvre, à la sous-étape b1), de façon aléatoire, selon un nombre prédéterminé de sous-groupes (C.W.M.C), les sous-groupes (C.W.M.C) comprenant sensiblement le même nombre d'images (I.R).

3. Procédé selon la revendication 1, le partitionnement étant mis en œuvre, à la sous-étape b1), par un partitionnement en K-moyennes appliqué au vecteur caractéristique de chaque image.

4. Procédé selon l'une des revendications précédentes, la sous-étape b3) comprenant, pour chaque couple de grands sous-groupes (A, B) :
- l'apprentissage d'un classificateur, en utilisant une pluralité de vecteurs caractéristiques du grand sous-groupe, appelé premier grand sous-groupe (A), en tant que classe positive, et une pluralité de vecteurs caractéristiques d'un sous-groupe composé de vecteurs d'images issus aléatoirement d'une pluralité de grands sous-groupes, en tant que classe négative ;
- pour chaque grand sous-groupe différent du premier grand sous-groupe, le grand sous-groupe différent étant appelé deuxième grand sous-groupe (B), la détermination d'un score de similarité du deuxième grand sous-groupe (B) vers le premier grand sous-groupe (A), en testant le classificateur sur une pluralité de vecteurs caractéristiques du deuxième grand sous-groupe.

5. Procédé selon la revendication 4, le classificateur étant un classificateur de type SVM.

6. Procédé selon l'une des revendications 1 à 3, la sous-étape b3) comprenant, pour chaque couple de grands sous-groupes (A, B), chaque couple étant composé d'un premier grand sous-groupe (A) et d'un deuxième grand sous-groupe (B) :
- la mesure d'une distance entre chacun des vecteurs caractéristiques du premier grand sous-groupe (A) et chacun des vecteurs caractéristiques du deuxième grand sous-groupe (B) ;
- la détermination d'un score de similarité entre le premier grand sous-groupe (A) et le deuxième grand sous-groupe (B), par le calcul de la moyenne des distances.

7. Procédé selon l'une des revendications 4 à 6, la sous-étape b4) comprenant la détermination d'un seuil de similarité, et, pour chaque couple de grands sous-groupes (A, B), la fusion d'un premier grand sous-groupe (A) et d'un deuxième grand sous-groupe (B) si :
- le score de similarité du deuxième grand sous-groupe (B) vers le premier grand sous-groupe (A) est supérieur au seuil de similarité ;
- le score de similarité du premier grand sous-groupe (A) vers le deuxième grand sous-groupe (B) est supérieur au seuil de similarité.

8. Procédé selon la revendication 7, la fusion du premier grand sous-groupe (A) et du deuxième grand sous-groupe (B) étant effectuée si :
- le score de similarité du deuxième grand sous-groupe (B) vers le premier grand sous-groupe (A) est le score de similarité le plus élevé parmi tous les autres scores de similarité de couples comprenant le deuxième grand sous-groupe (B) ;
- le score de similarité du premier grand sous-groupe (A) vers le deuxième grand sous-groupe (B) est le score de similarité le plus élevé parmi tous les autres scores de similarité de couples comprenant le premier grand sous-groupe (A).

9. Procédé selon l'une des revendications précédentes, les sous-étapes b3) et b4) étant réitérées jusqu'à obtenir un nombre prédéterminé de sous-catégories (M.S.C).

10. Programme d'ordinateur (PRG) téléchargeable depuis un réseau de communication et/ou enregistré sur un support lisible par ordinateur et/ou exécutable par un processeur, **caractérisé en ce qu'**il comprend des instructions pour l'exécution des étapes du procédé selon l'une quelconque des revendications 1 à 9, lorsque ledit programme est exécuté sur un ordinateur (ORD).

11. Système d'extraction de caractéristiques visuelles, configuré pour mettre en œuvre le procédé de transfert d'apprentissage selon l'une des revendications 1 à 9.

## Patentansprüche

1. Verfahren, das von einem Computer (ORD) implementiert wird, zum Extrahieren von visuellen Merkmalen aus Bildern, unter Verwendung von zwei neuronalen Faltungsnetzen, und zum Übertragen von Training vom ersten neuronalen Faltungsnetz an das zweite neuronale Faltungsnetz, umfassend die folgenden Schritte:
a) Trainieren des ersten neuronalen Faltungsnetzes anhand einer Datenbank von Bildern, die gemäß einer Vielzahl von Kategorien der spezifischsten Ebene der Datenbank markiert sind, wobei jedes Bild durch einen Merkmalsvektor dargestellt werden kann;
b) für jede der Kategorien der spezifischsten Ebene, Bilden mindestens einer Unterkategorie;
c) Neumarkieren der Datenbank von Bildern mit der Gesamtheit der Unterkategorien, um eine neu markierte Datenbank von Bildern zu bilden;
d) Trainieren des zweiten neuronalen Faltungsnetzes anhand der neu markierten Datenbank von Bildern;
wobei Schritt b) des Bildens mindestens einer Unterkategorie die folgenden Unterschritte umfasst:
b1) für jede der Kategorien der spezifischsten Ebene, Teilen der Bilder der Kategorie (I.C) in eine Vielzahl von Untergruppen (C.W.M.C);
b2) für jede Untergruppe (C.W.M.C), Bestimmen der Anzahl von Bildern (I.R), und falls die Anzahl von Bildern (I.R) kleiner als ein Schwellenwert ist, Anfügen jedes Bildes (I.R) der Untergruppe (C.W.M.C) an eine Untergruppe (C.W.M.C), deren Anzahl von Bildern größer als der Schwellenwert ist, die als große Untergruppe bezeichnet wird, wobei jedes Bild (I.R) an die nächstgelegene große Untergruppe (C.W.M.C) angefügt wird, indem ein Merkmalsvektor einer großen Untergruppe (C.W.M.C) bestimmt wird, der dem Merkmalsvektor, der das Bild darstellt, am nächsten gelegen ist;
b3) Bestimmen einer Matrix (Ms) von Ähnlichkeitsmessungen zwischen jeder der großen Untergruppen (C.W.M.C);
b4) Zusammenführen der großen Untergruppen in Abhängigkeit von der Matrix von Ähnlichkeitsmessungen, um die Unterkategorien (M.S.C) zu bilden.

2. Verfahren nach Anspruch 1, wobei die Teilung im Unterschritt b1) zufällig gemäß einer vorbestimmten Anzahl von Untergruppen (C.W.M.C) implementiert wird, wobei die Untergruppen (C.W.M.C) im Wesentlichen die gleiche Anzahl von Bildern (I.R) umfassen.

3. Verfahren nach Anspruch 1, wobei die Teilung im Unterschritt b1) durch eine Teilung in k Mittelwerte implementiert wird, die auf den Merkmalsvektor eines jeden Bildes angewandt wird.

4. Verfahren nach einem der vorhergehenden Ansprüche, wobei Unterschritt b3) für jedes Paar von großen Untergruppen (A, B) Folgendes umfasst:
- Trainieren eines Klassifikators unter Verwendung einer Vielzahl von Merkmalsvektoren der großen Untergruppe, die als erste große Untergruppe (A) bezeichnet wird, als positive Klasse, und einer Vielzahl von Merkmalsvektoren einer Untergruppe, die aus Bildvektoren zusammengesetzt ist, die zufällig aus einer Vielzahl von großen Untergruppen hervorgegangen sind, als negative Klasse;
- für jede große Untergruppe, die von der ersten großen Untergruppe verschieden ist, wobei die verschiedene große Untergruppe als zweite große Untergruppe (B) bezeichnet wird, Bestimmen eines Ähnlichkeits-Scores der zweiten großen Untergruppe (B) gegenüber der ersten großen Untergruppe (A) durch Testen des Klassifikators an einer Vielzahl von Merkmalsvektoren der zweiten großen Untergruppe.

5. Verfahren nach Anspruch 4, wobei der Klassifikator ein SVM-artiger Klassifikator ist.

6. Verfahren nach einem der Ansprüche 1 bis 3, wobei Unterschritt b3) für jedes Paar von großen Untergruppen (A, B), wobei jedes Paar aus einer ersten großen Untergruppe (A) und einer zweiten großen Untergruppe (B) zusammengesetzt ist, Folgendes umfasst:
- Messen eines Abstands zwischen jedem der Merkmalsvektoren der ersten großen Untergruppe (A) und jedem der Merkmalsvektoren der zweiten großen Untergruppe (B);
- Bestimmen eines Ähnlichkeits-Scores zwischen der ersten großen Untergruppe (A) und der zweiten großen Untergruppe (B) durch Berechnen des Mittelwertes der Abstände.

7. Verfahren nach einem der Ansprüche 4 bis 6, wobei Unterschritt b4) das Bestimmen eines Ähnlichkeitsschwellenwertes und für jedes Paar von großen Untergruppen (A, B) das Zusammenführen einer ersten großen Untergruppe (A) und einer zweiten großen Untergruppe (B) umfasst, falls:
- der Ähnlichkeits-Score der zweiten großen Untergruppe (B) gegenüber der ersten großen Untergruppe (A) größer als der Ähnlichkeitsschwellenwert ist;
- der Ähnlichkeits-Score der ersten großen Untergruppe (A) gegenüber der zweiten großen Untergruppe (B) größer als der Ähnlichkeitsschwellenwert ist.

8. Verfahren nach Anspruch 7, wobei das Zusammenführen der ersten großen Untergruppe (A) und der zweiten großen Untergruppe (B) erfolgt, falls:
- der Ähnlichkeits-Score der zweiten großen Untergruppe (B) gegenüber der ersten großen Untergruppe (A) der höchste Ähnlichkeits-Score von allen anderen Ähnlichkeits-Scores von Paaren ist, die die zweite große Untergruppe (B) umfassen;
- der Ähnlichkeits-Score der ersten großen Untergruppe (A) gegenüber der zweiten großen Untergruppe (B) der höchste Ähnlichkeits-Score von allen anderen Ähnlichkeits-Scores von Paaren ist, die die erste große Untergruppe (A) umfassen.

9. Verfahren nach einem der vorhergehenden Ansprüche, wobei die Unterschritte b3) und b4) wiederholt werden, bis eine vorbestimmte Anzahl von Unterkategorien (M.S.C) erhalten wird.

10. Computerprogramm (PRG), das von einem Kommunikationsnetz heruntergeladen werden kann und/oder auf einem von einem Computer lesbaren Träger gespeichert ist und/oder von einem Prozessor ausführbar ist, **dadurch gekennzeichnet, dass** es Anweisungen zum Ausführen der Schritte des Verfahrens nach einem der Ansprüche 1 bis 9 aufweist, wenn das Programm auf einem Computer (ORD) ausgeführt wird.

11. System zum Extrahieren von visuellen Merkmalen, das dafür konfiguriert ist, das Verfahren zum Übertragen von Training nach einem der Ansprüche 1 bis 9 zu implementieren.

## Claims

1. A method, implemented by a computer (ORD), for extracting visual features from images using two convolutional neural networks, and for transferring training from the first convolutional neural network to the second convolutional neural network, comprising the following steps of:
a) training the first convolutional neural network from a database of images labelled according to a plurality of categories of the most specific level of the database, each image being able to be represented by a feature vector;
b) constructing at least one sub-category for each of the categories of the most specific level;
c) relabelling the database of images with all the sub-categories in order to form a relabelled database of images;
d) training the second convolutional neural network from the relabelled database of images;
with step b) of constructing at least one sub-category comprising the sub-steps of:
b1) partitioning, for each of the categories of the most specific level, the images of the category (I.C) into a plurality of sub-groups (C.W.M.C);
b2) determining, for each sub-group (C.W.M.C), the number of images (I.R) and, if the number of images (I.R) is below a threshold, attaching each image (I.R) of the sub-group (C.W.M.C) to a sub-group (C.W.M.C), called large sub-group, whose number of images is greater than the threshold, each image (I.R) being attached to the closest large sub-group (C.W.M.C), by determining a feature vector of a large sub-group (C.W.M.C) closest to the feature vector representing the image;
b3) determining a matrix (Ms) of similarity measurements between each of the large sub-groups (C.W.M.C);
b4) merging the large sub-groups as a function of the matrix of similarity measurements in order to form the sub-categories (M.S.C).

2. The method according to claim 1, the partitioning being randomly implemented, in sub-step b1), according to a predetermined number of sub-groups (C.W.M.C), the sub-groups (C.W.M.C) comprising substantially the same number of images (I.R).

3. The method according to claim 1, the partitioning being implemented, in sub-step b1), by k-means partitioning applied to the feature vector of each image.

4. The method according to one of the preceding claims, sub-step b3) comprising, for each pair of large sub-groups (A, B):
- training a classifier, using a plurality of feature vectors of the large sub-group, called first large sub-group (A), as a positive class, and a plurality of feature vectors of a sub-group, which is made up of image vectors randomly derived from a plurality of large sub-groups, as a negative class;
- determining, for each large sub-group different from the first large sub-group, the different large sub-group being called second large sub-group (B), a similarity score of the second large sub-group (B) to the first large sub-group (A), by testing the classifier on a plurality of feature vectors of the second large sub-group.

5. The method according to claim 4, the classifier being an SVM type classifier.

6. The method according to one of claims 1 to 3, sub-step b3) comprising, for each pair of large sub-groups (A, B), with each pair being made up of a first large sub-group (A) and a second large sub-group (B):
- measuring a distance between each of the feature vectors of the first large sub-group (A) and each of the feature vectors of the second large sub-group (B);
- determining a similarity score between the first large sub-group (A) and the second large sub-group (B) by computing the average of the distances.

7. The method according to one of claims 4 to 6, sub-step b4) comprising determining a similarity threshold, and, for each pair of large sub-groups (A, B), merging a first large sub-group (A) and a second large sub-group (B) if:
- the similarity score of the second large sub-group (B) to the first large sub-group (A) is greater than the similarity threshold;
- the similarity score of the first large sub-group (A) to the second large sub-group (B) is greater than the similarity threshold.

8. The method according to claim 7, the merging of the first large sub-group (A) and the second large sub-group (B) being carried out if:
- the similarity score of the second large sub-group (B) to the first large sub-group (A) is the highest similarity score from among all the other similarity scores of pairs comprising the second large sub-group (B);
- the similarity score of the first large sub-group (A) to the second large sub-group (B) is the highest similarity score from among all the other similarity scores of pairs comprising the first large sub-group (A).

9. The method according to one of the preceding claims, sub-steps b3) and b4) being repeated until a predetermined number of sub-categories (M.S.C) is obtained.

10. A computer program (PRG) that can be downloaded from a communication network and/or stored on a computer-readable medium and/or can be executed by a processor, **characterised in that** it comprises instructions for executing the steps of the method according to any one of claims 1 to 9, when said program is executed on a computer (ORD).

11. A system for extracting visual features, configured to implement the method for transferring training according to one of claims 1 to 9.
